# EUROPÄISCHE PATENTSCHRIFT

(11) **EP 2 635 472 B1**
(45) Veröffentlichungstag und Bekanntmachung des Hinweises auf die Patenterteilung: **12.10.2016**
(21) Anmeldenummer: 11755259.6
(22) Anmeldetag: 17.08.2011
(51) Int. Cl.: B60T 8/172

(54) **STEUEREINRICHTUNG FÜR EIN FAHRZEUG-REGELSYSTEM UND VERFAHREN ZUR ERMITTLUNG VON REIFENZUSTÄNDEN VON FAHRZEUGREIFEN**
CONTROL DEVICE FOR A VEHICLE REGULATING SYSTEM AND METHOD FOR DETERMINING TYRE STATES OF VEHICLE TYRES
DISPOSITIF DE COMMANDE POUR UN SYSTÈME DE RÉGULATION AUTOMOBILE ET PROCÉDÉ DE DÉTERMINATION DE L'ÉTAT DES PNEUMATIQUES D'UN VÉHICULE

(30) Priorität: 05.11.2010 DE 102010050634
(43) Veröffentlichungstag der Anmeldung: 11.09.2013
(73) Patentinhaber: WABCO GmbH, 30453 Hannover (DE)
(72) Erfinder: BREUER, Karsten, 88179 Oberreute (DE); DIECKMANN, Thomas, 30982 Pattensen (DE)
(74) Vertreter: Lauerwald, Jörg
(86) Internationale Anmeldenummer: PCT/EP2011/004140
(87) Internationale Veröffentlichungsnummer: WO 2012/059148

(56) Entgegenhaltungen:
- DE-A1- 10 314 424
- DE-A1-102004 044 788
- DE-B3-102004 016 288
- DE-U1- 20 301 710

## Beschreibung

Die Erfindung betrifft eine Steuereinrichtung für ein Fahrzeug-Regelsystem, ein derartiges Fahrzeug-Regelsystem sowie ein Verfahren zum Ermitteln von Reifenzuständen von Fahrzeugreifen.

Fahrzeugreifen dienen der Übertragung sämtlicher Kräfte und Momente zwischen dem Fahrzeug und der Fahrbahn. Daher ermöglicht eine Überwachung oder Überprüfung der Reifen eine bessere Einstellung von Fahrzeug-Regelsystemen und ggf. das Erkennen von Gefahrensituationen.

Hierzu ist es zum einen bekannt, den Luftdruck in Fahrzeugreifen zu messen und zu überwachen. Weiterhin sind Verschleißsensoren bekannt, die ggf. bei einem zu großen Verschleiß des Reifenprofils zur Erkennung einer gefährlichen Situation beitragen können.

Die DE 101 19 352 C1 beschreibt ein Verfahren zur Bestimmung der Profileigenschaften eines Fahrzeugreifens, wobei von den Reifen zugeordneten Nahfeld-Radarsensoren Mikrowellen ausgesandt werden und somit die Profiltiefe der Fahrzeugreifen ermittelt werden kann.

Die DE 100 58 099 A1 beschreibt ein Verfahren und eine Vorrichtung zum Erkennen oder Abschätzen einer Reifenabnutzung, bei dem während des normalen Betriebs eines Fahrzeugs über Sensorsignale von Fahrzustands-Sensoren der Fahrzeug-Regelsysteme fahrdynamische Größen und andere die Reifenabnutzung beeinflussende Messgrößen erfasst, gespeichert und zur näherungsweisen Erkennung des Reifenzustandes bzw. Reifenverschleißes ausgewertet werden.

Die WO 2009/089972 A1 beschreibt ein Verfahren zum Verteilen des Antriebsmoments auf die Räder eines Fahrzeugs in Abhängigkeit vom Reifenzustand. Hierbei können Reifen mit geringem Luftdruck mittels Luftdrucksensoren oder auch anhand der Raddrehzahlen automatisch erkannt werden. Weiterhin kann der Verschleiß bzw. die Profiltiefe der einzelnen Räder mittels einer Sensorik bestimmt werden.

Die EP 1 549 536 B1 beschreibt Verbesserungen der Fahrzeug-Stabilitätssteuerung, wobei Reifenkrafteigenschaften einbezogen werden. Hierbei wird der Druck eines Reifens mittels eines Sensors bestimmt, woraus Reifenkräfte abgeschätzt und Informationen über die Reaktion des Fahrzeugs auf eine Fahrereingabe hin abgeschätzt werden können, um eine aktive Korrektur für den Radeinschlagwinkel, das Bremsmoment und/oder ein Antriebsmoment zu ermitteln.

Das Dokument DE102004016288B3 beschreibt ein Verfahren zur Bestimmung eines Reibwerts, bei dem Schwingungen eines Reifens (1) erfasst und zumindest eine Charakteristik der Reifenschwingung, insbesondere ein Frequenzspektrum und/oder ein Zeitbereichsspektrum, ausgewertet wird, wobei folgende Schritte durchgeführt werden:
- Daten werden mittels physikalischer und/oder phänomenologischer Modellansätze ausgewertet,
- Auswertesignale in zumindest zwei Frequenzbändern werden beobachtet,
- Amplituden der Auswertesignale werden mit reibwertabhängigen und von einem aktuellen Kraftübertragungszustand des Reifens (1) abhängigen Erfahrungswerten verglichen,
- ein Reibwert wird bestimmt,
- aus dem Reibwert wird eine maximal zur Verfügung stehende, vom Reifen (1) auf die Fahrbahn (5) übertragbare Kraft bestimmt.

Weiterhin sind spektroskopische Sensoren bekannt, mit denen Oberflächen detektiert werden können. Derartige spektroskopische Sensoren können auch von einem Fahrzeug aus eingesetzt werden.

Der Erfindung liegt die Aufgabe zu Grunde, mit relativ geringem Aufwand und relativ hoher Sicherheit einen Reifenzustand zu ermitteln.

Diese Aufgabe wird durch eine Steuereinrichtung nach Anspruch 1, ein Fahrzeug-Regelsystem nach Anspruch 10 sowie ein Verfahren nach Anspruch 11 gelöst. Die Unteransprüche beschreiben bevorzugte Weiterbildungen.

Erfindungsgemäß ist somit vorgesehen, die Fahrbahn-Oberfläche spektroskopisch zu untersuchen. Hierbei wird mittels eines spektroskopischen Sensors insbesondere untersucht, ob eine Wasserschicht bzw. Benetzung der Fahrbahnoberfläche mit Wasser vorliegt, wobei hierzu insbesondere die Höhe der Wasserschicht und/oder der Aggregatzustand des Wassers ermittelt werden kann.

Dem liegt insbesondere die Erkenntnis zu Grunde, dass mittels einer spektroskopischen Untersuchung in relevanten Absorptionsbanden von Wasser (H2O) auch der Aggregatzustand des Wassers detektiert werden kann. Hierbei kann neben IR-Strahlung auch Licht im optischen Bereich verwendet werden. Somit kann berücksichtigt werden, ob flüssiges Wasser oder aber gefrorenes Wasser, d. h. Schnee oder Eis vorliegt, wobei erfindungsgemäß erkannt wird, dass diese Aggregatzustände deutlich unterschiedliche Haftungseigenschaften des Fahrzeug-Reifens bewirken. Weiterhin wird erfindungsgemäß erkannt, dass spektroskopisch auch die Höhe der Wasserschicht detektiert werden kann, da bei der spektroskopischen Untersuchung eine hinreichende Eindringtiefe der ausgesandten IR-Strahlung in eine Wasserschicht vorliegt, um eine größere Wassertiefe als stärkeres Signal zu detektieren.

Hierfür kann Licht bzw. IR-Strahlung in zumindest drei voneinander verschiedenen Wellenlängen verwendet werden, z. B. 1460 nm zur Detektion von Wasser, 1550 nm zur Detektion von Eis und 1300 nm als Referenzwellenlänge.

Der optische Sensor kann insbesondere ein Oberflächensensor sein. Die Verwendung eines optischen Oberflächensensors hat den Vorteil, dass die tatsächliche Fahrbahnbeschaffenheit besonders zuverlässig und berührungsfrei gemessen werden kann. Ferner liefert der optische Oberflächensensor auch bei einem stehenden Fahrzeug eine Information über die Fahrbahnbeschaffenheit. Der optische Oberflächensensor kann über eine Lichtquelleneinheit zum Aussenden von Licht von zumindest einer Wellenlänge auf den Untergrund und zumindest einen Detektor umfassen, um von dem Untergrund reflektiertes Licht zu detektieren.

Der Oberflächensensor kann neben einem ersten Detektor einen zweiten Detektor umfassen, wobei der erste Detektor zum Erfassen von diffus reflektiertem Licht und der zweite Detektor zum Erfassen von spiegelnd reflektiertem Licht geeignet sind. Es können zumindest zwei Polarisatoren vorgesehen sein, wobei ein erster Polarisator mit einer ersten Polarisationseinrichtung dem ersten Detektor zugeordnet ist. Der Lichtquelleneinheit kann ein Lichtquellenpolarisator und/oder dem zweiten Detektor kann ein zweiter Polarisator zugeordnet sein, dessen Polarisierungsrichtung(en) im Wesentlichen senkrecht zu der ersten Polarisierungsrichtung des ersten Polarisators ausgerichtet ist/sind. Sind zumindest zwei Polarisatoren bzw. Polarisationsfilter vorgesehen, ist der erste Polarisator an dem ersten Detektor angeordnet, welcher nur Lichtwellen in der ersten Polarisationsrichtung zu dem ersten Detektor durchlässt. Ist ein Lichtquellenpolarisator an der Lichtquelleneinheit vorgesehen, ist dessen Polarisationsrichtung im Wesentlichen senkrecht zu der ersten Polarisationsrichtung des ersten Polarisators angeordnet, und das von dem Sensor ausgesandte Licht ist in einer Richtung im Wesentlichen senkrecht zu der ersten Polarisationsrichtung polarisiert, so dass an dem ersten Detektor polarisiertes, spiegelnd reflektiertes Licht herausgefiltert und nur diffus reflektiertes Licht detektiert wird. Ein ähnlicher Effekt kann erreicht werden, wenn ein zweiter Polarisator vor dem zweiten Detektor angeordnet ist, dessen Polarisationsrichtung im Wesentlichen senkrecht zu der ersten Polarisationsrichtung ausgerichtet ist. Der zweite Polarisator kann alternativ oder zusätzlich zu dem Lichtquellenpolarisator verwendet werden. Es kann auch vorgesehen sein, in der Lichtquelleneinheit bereits polarisiertes Licht zu erzeugen Die Lichtquelleneinheit kann zum Aussenden von Licht von zumindest zwei voneinander verschiedenen Wellenlängen oder zum Aussenden von mehreren Wellenlängen auf den Untergrund bzw. die Fahrbahnoberfläche ausgelegt sein. Dazu kann die Lichtquelleneinheit beispielsweise mehrere Lichtquellen umfassen. Die Verwendung mindestens zweier, vorzugsweise drei von einander verschiedener Wellenlängen erlaubt es, den Sensor in spektraler Weise zu betreiben. Durch die Verwendung von Wellenlängen, welche z.B. von Eis oder Wasser besonders gut absorbiert werden, können Eis bzw. Wasser auf der Fahrbahn bzw. Fahrbahnoberfläche erkannt werden, wenn das reflektierte Licht der vom Wasser bzw. Eis absorbierten Wellenlänge mit dem einer Referenzwellenlänge verglichen wird. Es ist somit möglich, die Prinzipien der Spektralanalyse und der Diffus- und Spiegelndreflexion in nur einem Gerät, bzw. einem einzigen Gehäuse auszuführen. Die zumindest eine Lichtquelleneinheit, der erste Detektor und gegebenenfalls der zweite Detektor können dazu in einem gemeinsamen einzigen und/oder einstückigen Gehäuse beispielsweise unmittelbar nebeneinander angeordnet sein.

Es kann Licht in zumindest drei voneinander verschiedenen Wellenlängen im Infrarotbereich verwendet werden. Die Lichtquelleneinheit kann dazu mehrere Lichtquellen umfassen. Z.B. kann die Lichtquelleneinheit dazu ausgelegt sein, Infrarotlicht der Wellenlängen 1300 nm, 1460 nm und 1550 nm auszusenden. Während Licht der Wellenlänge 1460 nm besonders gut von Wasser absorbiert wird, wird Licht der Wellenlänge 1550 nm gut von Eis absorbiert. Licht im Bereich von ungefähr 1300 nm kann dann als Referenzwellenlänge verwendet werden. Es können jedoch auch andere Wellenlängen verwendet werden. Insbesondere für die Referenzwellenlänge kann jede andere Wellenlänge verwendet werden, welche weder von Eis noch Wasser nennenswert absorbiert wird. Als wassersensitive Wellenlänge kann auch jede andere Wellenlänge verwendet werden, welche in Wasser erhöht absorbiert wird. Genauso kann als eissensitive Wellenlänge jede Wellenlänge gewählt werden, welche in Eis erhöht absorbiert wird. Andere interessante Wellenlängen umfassen z.B. 1190, 1040, 970, 880 und 810 nm im Infrarotbereich, sowie die sichtbaren Wellenlängen 625, 530 und 470 nm.

Die Lichtquelleneinheit kann dazu ausgelegt sein, Licht genau drei verschiedener Wellenlängen auszusenden. Dazu kann die Lichtquelleneinheit drei Lichtquellen, eine Lichtquelle für jede Wellenlänge aufweisen. Es werden nur die drei Wellenlängen verwendet, um sowohl spektral als auch spiegelnd/diffus reflektiertes Licht zu erfassen, um sowohl die Fahrbahnbeschaffenheit als auch die Art der Fahrbahn zu ermitteln bzw. zu erkennen. Jede der Lichtquellen kann einzeln ansteuerbar und unabhängig von den anderen an- und abschaltbar sein bzw. in der Intensität regulierbar sein.

Darüber hinaus können auch mehr als die oben genannten zwei oder drei voneinander verschiedenen Wellenlängen verwendet werden. Beispielsweise kann die Wellenlänge 625 nm auch zur Messung des diffus und spiegelnd reflektierten Lichts verwendet werden.

Es kann weiterhin vorgesehen sein, das ausgesendete Licht in der Intensität bzw. Amplitude zu modulieren. Das Modulieren der Intensität oder Amplitude kann durch An- und Ausschalten aller oder einzelner Lichtquellen der Lichtquelleneinheit erfolgen. Das Modulieren der Intensität bzw. das An- und Abschalten kann für jede Wellenlänge der Lichtquelleneinheit oder für jede Lichtquelle der Lichtquelleneinheit separat erfolgen. Beispielsweise kann das Modulieren der Amplitude oder Intensität bzw. das An- und Abschalten für jede Wellenlänge mit der gleichen Frequenz, jedoch phasenverschoben und/oder mit unterschiedlichen Frequenzen erfolgen. Dadurch kann beispielsweise erreicht werden, dass das Licht unterschiedlicher Wellenlängen zeitlich versetzt oder sequentiell ausgesandt wird. Z. B. kann vorgesehen sein, Licht einer ersten Wellenlänge für ein bestimmtes Zeitintervall auszusenden, dann das Licht der ersten Wellenlänge abzuschalten und eine zweite Wellenlänge einzuschalten usw.. In den Detektoren wird dann jeweils Licht von nur einer Wellenlänge detektiert. Dadurch kann eine spektrale Analyse oder Aufspaltung des einfallenden Lichts an den Detektoren vermieden werden. Es sind auch Mischformen verschiedener Modulationstechniken anwendbar, insbesondere frequenz- und amplitudenmodulierte optische Signalzüge mit oder ohne Unterbrechungen.

Somit ist es auch möglich, einfache Detektoren als ersten oder zweiten Detektor zu verwenden. Beispielsweise können Photodioden verwendet werden. Der erste Detektor und der zweite Detektor können jeweils eine oder mehrere Photodioden umfassen. Zumindest der erste Detektor kann dazu ausgelegt sein, Licht aller von der Lichtquelleneinheit ausgesendeten Wellenlängen zu erfassen. Der Detektor kann auch alternativ oder ergänzend einen optoelektronischen Chip (z.B. CCD) oder eine andere optische Aufnahmeeinrichtung umfassen.

Der erste und der zweite Detektor können zur Erfassung bzw. zur Ermittlung von spiegelnd reflektiertem und diffus reflektiertem Licht verwendet werden. Zudem kann zumindest einer aus dem ersten und dem zweiten Detektor auch für die spektrale Ermittlung verwendet werden. Zumindest dieser Detektor ist dann dazu ausgelegt, Licht mehrerer Wellenlängen zu detektieren. In diesem Beispiel verfügt der Sensor über genau den ersten Detektor und den zweiten Detektor und es sind keine weiteren Detektoren vorgesehen.

Der Oberflächensensor kann ferner eine Auswerteinrichtung umfassen, welche eine Information über die Beschaffenheit der Fahrbahnoberfläche bzw. des Untergrunds ausgibt.

Der Oberflächensensor ist auch dazu geeignet, die Dicke eines Wasserfilms auf der Fahrbahnoberfläche oder die Dicke einer Eisschicht zu erkennen, so dass zum Beispiel bei einer nassen Fahrbahn erst ab einer bestimmten Wasserfilmdicke, ab welcher zum Beispiel Aquaplaning entstehen kann, die Information an den Fahrer übermittelt wird.

Erfindungsgemäß kann somit zunächst eine Reaktion der Reifen auf jeweils angreifende Längs- und/oder Quer-Kräfte oder entsprechende Momente bewertet werden. Hierzu werden die an den Reifen angreifenden Kräfte und Momente aus den Fahrdynamik-Messgrößen bzw. Fahrzustands-Messgrößen der Fahrzeug-Sensoren ermittelt, und weiterhin auch die Reaktion des Fahrzeugs bzw. seiner Räder auf diese angreifenden Kräfte und Momente. Somit kann das Schlupfverhalten der einzelnen Reifen ermittelt werden, insbesondere als Reibwerte und/oder Nassgriffigkeit, weiterhin aber auch in Längs-Richtung und/oder Querrichtung, wobei diese Schlupfverhalten insbesondere in Abhängigkeit des Wasserzustandes ermittelt werden kann, und dann mit den angreifenden Kräften und/oder Momenten in Beziehung gesetzt werden. Erfindungsgemäß kann z. B. der Verlust an Nassgriffigkeit, Aquaplaning-Gefahr oder fehlende Ganzjahres- (Matsch und Schnee, M+S)-Eigenschaften ermittelt werden.

Somit können ermittelte Ist-Werte des Schlupf-Verhaltens bzw. Reibwert-Verhaltens mit den ermittelten Eigenschaften der Fahrbahnoberfläche, d. h. insbesondere einer möglicherweise vorhanden Wasserschicht und deren Höhe und Aggregat-Zustand, abgeglichen werden.

Dieser Abgleich ermöglicht zum einen den Rückschluss auf den Reifenzustand; es kann festgestellt werden, ob der Reifenzustand, insbesondere die Profiltiefe, das Verhalten bzw. den Reibwert ermöglicht, der bei den gegebenen Oberflächen-Zustand bzw. Wasser-Benetzung der Fahrbahn-Oberfläche zu erwarten ist. Somit kann der Reifenzustand auf den gegebenen Wasser-Verhältnissen bewertet werden. Hierzu können vorteilhafterweise Soll-Werte bzw. abgelegte Referenzwerte über das Verhalten eines Reifens auf Fahrbahnen in Abhängigkeit entsprechender Wasser-Eigenschaften, d. h. entsprechender Höhe und betreffendem Aggregatzustand der aufliegenden Wasserschicht verglichen werden.

Indem somit der Reifenzustand bekannt ist, kann zum einen bei Erkennen eines sehr schlechten Reifenzustandes, d.h. einer hohen Abnutzung der Profiltiefe und/oder eine Verhärtung der Laufstreifengummimischung, ein Warnsignal ausgegeben werden. Weiterhin kann die Beurteilung des Reifenzustandes auch in dem Fahrzeug-Regelsystem, z. B. einem Fahrzeug-Stabilitätssystem oder ABS, berücksichtigt werden. Somit kann das vorherrschende Kraftschlusspotential der Reifen besser ausgenutzt werden; die Regelung kann grundsätzlich auftretende Kräfte bzw. Momente soweit zulassen, dass sie dieses Kraftschlusspotential bzw. die einzelnen Reibwerte auf den jeweiligen Fahrbahn-Zuständen ausnutzen.

Erfindungsgemäß wird somit direkt das Reibwertverhalten bzw. Verhalten des Reifens auf der Fahrbahn ermittelt, ohne hierfür auf theoretische Daten wie das Reifenalter oder Daten über die Gummimischung der Reifen zurückzugreifen zu müssen. Dies ermöglicht Vorteile, da auch Daten über die Reifenalterung nicht immer die tatsächlichen Belastungen und den tatsächlichen Verschleiß und die Alterung aufgrund ungünstiger Witterungszustände wie Temperatur- oder Sonnenstrahleinwirkungen auf den Reifen berücksichtigen.

Die Eigenschaften des Fahrzeugreifens, insbesondere auch bezüglich dem Verlust an Nassgriffigkeit, Aquaplaning-Gefahr oder fehlende M+S-Eigenschaften, können weiterhin auch angezeigt bzw. protokolliert werden.

Die Erfindung wird im Folgenden anhand der beiliegenden Zeichnungen an einer Ausführungsform näher erläutert. Es zeigen:
- Fig. 1: ein erfindungsgemäßes Fahrzeug auf einer Fahrbahn in Aufsicht;

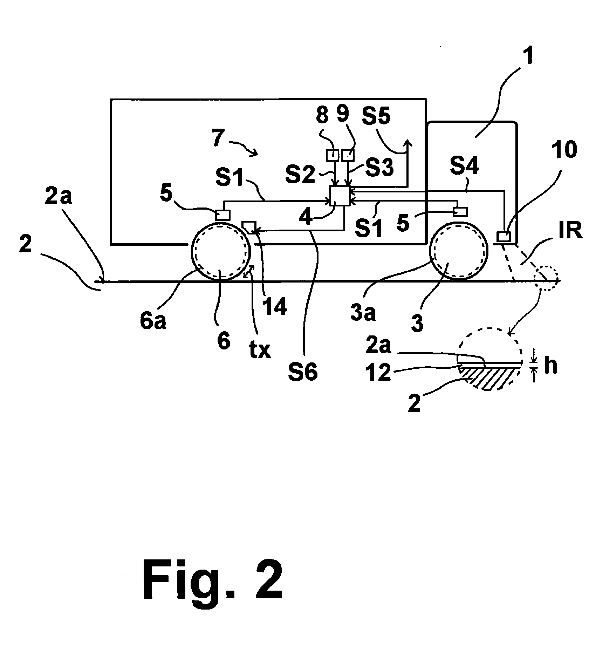

- Fig. 2: eine Seitenansicht des Fahrzeugs aus Figur 1;
- Fig. 3: ein Flussdiagramm eines erfindungsgemäßen Verfahrens.

Ein Fahrzeug 1 fährt auf einer Fahrbahn 2, z. B. in einer Kurve mit Lenkradeinschlag und schräg gestellten Vorderrädern 3. Das Fahrzeug 1 weist ein Fahrdynamik-Regelsystem und/oder Fahrstabilitätsregelsystem mit einer Steuereinrichtung 4, ABS-Sensoren 5 an vorzugsweise sämtlichen Rädern, d. h. den Vorderrädern 3 und Hinterrädern 6, sowie weitere Fahrdynamik-Sensoren, z. B. einen Gierratensensor 8 zur Messung einer Gierrate w sowie einen Querbeschleunigungssensor 9 zur Messung einer Querbeschleunigung aq auf.

Weiterhin ist in dem Fahrzeug 1 ein spektroskopischer Sensor 10 vorgesehen, der auf die Fahrbahn 2 gerichtet ist, z. B. im vorderen Bereich des Fahrzeugs 1. Der spektroskopische Sensor 10 arbeitet vorzugsweise im IR (Infrarot)-Wellenlängenbereich und detektiert Absorptionsbande von Wasser (H2O), indem er IR-Strahlung IR aussendet und von der Fahrbahn- Oberfläche 2a der Fahrbahn 2 reflektierte IR-Strahlung IR detektiert.

Die ABS-Sensoren 5 geben Raddrehzahl-Messsignale S1 als erste Messsignale an die Steuereinrichtung 4; entsprechend gibt der Gierratensensor 8 ein Gierraten-Messsignal S2 als zweites Messsignal, und der Querbeschleunigungssensor 9 ein Querbeschleunigungs-Messsignal S3 als drittes Messsignal an die Steuereinrichtung 4 aus.

Der spektroskopische Sensor 10 gibt ein Fahrbahn-Messsignal S4 als viertes Messsignal an die Steuereinrichtung 4 aus, das - anders als die Messsignale S1, S2, S3 - keine Fahrzustandsgröße des Fahrzeugs 1, sondern Daten über die spektroskopische Zusammensetzung der Fahrbahn-Oberfläche 2a der Fahrbahn 2 liefert. Der spektroskopische Sensor 10 ist vorteilhafterweise derartig ausgelegt, dass er die Konzentration von Wasser auf der Fahrbahn-Oberfläche 2a detektiert, insbesondere auch die Höhe h eines Wasserfilms 12 auf oder als Teil der Fahrbahn-Oberfläche 2a. Weiterhin enthalten die Messsignale S4 des spektroskopischen Sensors 10 Informationen über den Aggregat-Zustand des Wasserfilms 12 oder von Wasser auf der Fahrbahn-Oberfläche 2a. So kann der spektroskopische Sensor 10 z. B. detektieren, ob das Wasser bzw. der Wasserfilm 12 flüssig oder gefroren, d. h. Eis oder Schnee ist.

Der spektroskopische Sensor 10 weist eine Lichtquelleneinheit und einen oder mehrere Detektoren auf. Die Lichtquelleneinheit kann Licht in zumindest drei voneinander verschiedenen Wellenlängen im Infrarotbereich oder auch sichtbaren Bereich verwenden. Die Lichtquelleneinheit kann dazu mehrere Lichtquellen umfassen. Z. B. kann die Lichtquelleneinheit dazu ausgelegt sein, IR-Strahlung der Wellenlängen 1300 nm, 1460 nm und 1550 nm auszusenden. Während IR-Strahlung der Wellenlänge 1460 nm besonders gut von Wasser absorbiert wird, wird IR-Strahlung der Wellenlänge 1550 nm gut von Eis absorbiert. IR-Strahlung im Bereich von ungefähr 1300 nm kann dann als Referenzwellenlänge verwendet werden. Es können jedoch auch andere Wellenlängen verwendet werden. Insbesondere für die Referenzwellenlänge kann jede andere Wellenlänge verwendet werden, welche weder von Eis noch Wasser nennenswert absorbiert wird. Als wassersensitive Wellenlänge kann auch jede andere Wellenlänge verwendet werden, welche in Wasser erhöht absorbiert wird. Genauso kann als eissensitive Wellenlänge jede Wellenlänge gewählt werden, welche in Eis erhöht absorbiert wird. Andere interessante Wellenlängen umfassen z.B. 1190, 1040, 970, 880 und 810 nm im Infrarotbereich, sowie die sichtbaren Wellenlängen 625, 530 und 470 nm.

Eine Fahrgeschwindigkeit v des Fahrzeugs 1 kann z. B. aus den Raddrehzahl-Messsignalen S1, und/oder einer Drehzahl einer Abtriebswelle des Fahrzeug-Getriebes gebildet werden. Hieraus kann entsprechend eine Längsbeschleunigung a ermittelt werden.

Erfindungsgemäß wird weiterhin z. B. ein Schräglaufwinkel α der Vorderräder 3 ermittelt aus dem Lenkradeinschlag oder einem geeigneten Sensor. Weiterhin können die Masse, Radstand und Spurbreite des Fahrzeugs bekannt und im Steuergerät 4 bzw. einem externen Speicher abgelegt sein.

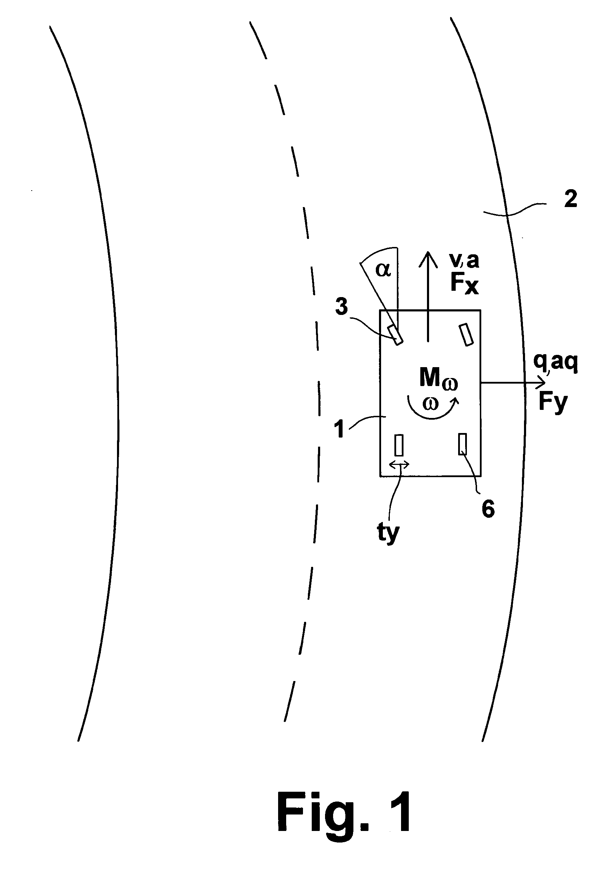

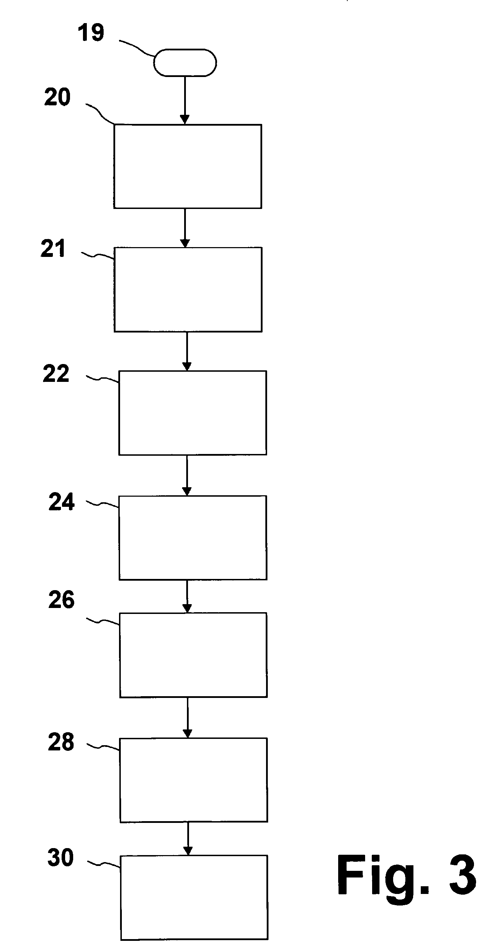

Erfindungsgemäß werden nach dem Start des Verfahrens in Schritt 19, z. B. bei Start des gesamten Fahrzeug-Regelsystems 7, in Schritt 20, 21 gemäß Fig. 3 zunächst Reaktionseigenschaften der Fahrzeug-Räder 3, 6 ermittelt, wobei diese Reaktionseigenschaften hier der Längsschlupf tx und/oder Querschlupf ty sind. Hierzu wird aus den gemessenen oder über die Signale S1, S2, S3 ermittelten Fahrzustands-Werten z. B. zunächst in Schritt 20 ermittelt, ob nennenswerte Längskräfte Fx oder Seitenkräfte Fy und/oder angreifende Drehmomente Mω vorliegen, z. B. ob ein Regeleingriff des Regelsystems durch Ausgabe eines Brems-Steuersignals S6 an eine Bremse 14 vorliegt oder gegebenenfalls bald vorliegen kann. In Schritt 21 wird dann das Schlupfverhalten der Räder 3, 6 ermittelt, z. B. bei welchen Kräften Fx, Fy oder Momenten Mω wie dem in Fig. 1 angedeutete Giermoment die Reifen die Haftung verlieren, z. B. über den Längsschlupf tx bei einem ABS- Eingriff oder ASR-Eingriff oder über den Schräglaufwinkel α für den Querschlupf ty.

In Schritt 22 werden dann aus den angreifenden Kräften Fx, Fy und/oder Momenten Mω und dem Schlupfverhalten tx, ty Reaktionseigenschaften der Reifen 3a, 6a der Fahrzeug-Räder 3, 6 ermittelt, z. B. als Reibwerte.

In Schritt 24 werden die Fahrbahn-Messsignale S4 aufgenommen.

In Schritt 26 wird ein Abgleich der ermittelten Eigenschaften der Fahrbahn-Oberfläche 2a mit den ermittelten Reaktionseigenschaften der Reifen 3a, 6a vorgenommen, um Daten über die Nassgriffigkeit, Aquaplaning- Eigenschaften und Griffigkeit bei Matsch und Schnee zu gewinnen. Somit können Reibwerte in Abhängigkeit von den Wasserverhältnissen gewonnen werden.

In Schritt 28 erfolgt eine Bewertung des Reifenzustand der Räder 3, 6 Somit kann bewertet werden, ob das Reaktionsverhalten dem Zustand der Fahrbahnoberfläche angemessen ist, d.h. z. B. ein geringer Reibwert einem relevanten Wasserfilm 12 entspricht oder nicht. Falls kein Wasserfilm 12 bzw. kein Eis oder Schnee detektiert wird, sind bessere Reaktionseigenschaften zu erwarten, sonst kann auf schlechte Reifeneigenschaften geschlossen werden.

In Schritt 30 können in Abhängigkeit dieser Ermittlung ggf. Reifenzustands-Signale S5, z. B. als Warnsignale ausgegeben werden, wenn ein mangelhafter Reifenzustand detektiert wird, z. B. bei zu schlechten Reaktionseigenschaften der Reifen 3a, 6a. Die Reifenzustands-Signale S5 können als Anzeigesignale ausgegeben werden, z. B. an eine Anzeigeeinrichtung im Fahrzeug 1 oder zur Verwertung in dem Fahrdynamik-Regelsystem.

Falls in den Reifen 3a, 6a Reifenverschleißsensoren vorgesehen sind, können deren Messsignale mit den erfindungsgemäß ermittelten Reifenzustandseigenschaften verglichen werden. Die erfindungsgemäß ermittelten Reifenzustandseigenschaften sind jedoch umfassender und können z. B. auch eine Verhärtung der Laufstreifengummimischung, ungleichmäßigen Abtrag insbesondere der Profiltiefe usw. der Reifen 3a, 6a berücksichtigen. Falls weiterhin Reifendrucksensoren zum Messen des Luftdrucks in den Reifen 3a, 6a vorgesehen sind, können deren Messsignale ergänzend herangezogen werden, um in Schritt 26 den Luftdruck der Reifen 3a, 6a zu berücksichtigen, der ihre Griffigkeit und somit die Reaktion auf Instabilitäten oder möglichen Schlupf entsprechend beeinflusst.

## Patentansprüche

1. Steuereinrichtung (4) für ein Fahrzeug-Regelsystem (7),
wobei die Steuereinrichtung (4) Fahrzustands-Messsignale (S1, S2, S3) von Fahrzustands-Sensoren (5, 8, 9) des Fahrzeugs (1) aufnimmt und aus den Fahrzustands-Messsignalen (S1, S2, S3) Reaktionseigenschaften (tx, ty) der Fahrzeug-Räder (3, 6) ermittelt,
wobei die Steuereinrichtung (4) weiterhin Fahrbahn-Messsignale (S4) eines auf eine Fahrbahn-Oberfläche (2a) ausgerichteten spektroskopischen Sensors (10) aufnimmt und hieraus das Vorhandensein und/oder Eigenschaften einer Wasserschicht (12) auf der Fahrbahn-Oberfläche (2a) ermittelt, und
die Steuereinrichtung (4) aus den ermittelten Reaktionseigenschaften (tx, ty) der Fahrzeug-Räder (3, 6) und den Fahrbahn-Messsignalen (S4) Reifeneigenschaften der Reifen (3a, 6a) ermittelt,
**dadurch gekennzeichnet, dass** die Steuereinrichtung aus den ermittelten Reifeneigenschaften den Reifenzustand ermittelt und dass bewertet wird, ob das daraus abgeleitete Reaktionsverhalten der Reifen dem Zustand der Fahrbahnoberfläche angemessen ist oder nicht.

2. Steuereinrichtung nach Anspruch 1, **dadurch gekennzeichnet, dass** die Steuereinrichtung (4) als Reaktionseigenschaften (tx, ty) der Fahrzeugräder (3, 6) ein Schlupfverhalten (tx, ty) der Fahrzeug-Räder (3, 6) ermittelt,
indem die Steuereinrichtung (4) aus den Fahrzustands-Messsignalen (S1, S2, S3) an den Fahrzeug-Rädern (3, 6) angreifende Kräfte (Fx, Fy) und/oder Momente (Mω) ermittelt, und weiterhin ermittelt, bei welchen Kräften (Fx, Fy) und/oder Momenten (Mω) ein Längsschlupf (tx) und/oder Querschlupf (ty) der einzelnen Fahrzeug-Räder (3, 6) einsetzt.

3. Steuereinrichtung nach Anspruch 2, **dadurch gekennzeichnet, dass** die Steuereinrichtung (4) das Schlupfverhalten (tx, ty) bei hinreichend großen Kräften (Fx, Fy) oder Momenten (Mω) ermittelt, insbesondere bei Einsetzen eines Regeleingriffs (S6) des Fahrzeug-Regelsystems (ABS, ESC).

4. Steuereinrichtung nach Anspruch 2 oder 3, **dadurch gekennzeichnet, dass** sie die an den Fahrzeug-Rädern (3, 6) angreifenden Kräfte (Fx, Fy) und/oder Momente (Mω) ermittelt aus einer oder mehreren der folgenden Fahrzustands-Messgrößen:
Längsgeschwindigkeit (v), Längsbeschleunigung (a), Quergeschwindigkeit (q), Querbeschleunigung (aq), Gierrate (w) des Fahrzeugs (1), Raddrehzahlen (n) der Fahrzeug-Räder (3, 6).

5. Steuereinrichtung nach einem der vorherigen Ansprüche, **dadurch gekennzeichnet, dass** die Steuereinrichtung (4) aus den Fahrbahn-Messsignalen (S4) zum einen ein Vorhandensein und zum anderen Höhe (h) und/oder Aggregatzustand einer Wasserschicht (12) auf der Fahrbahn-Oberfläche (2a) ermittelt.

6. Steuereinrichtung nach Anspruch 5, **dadurch gekennzeichnet, dass** sie aus vorgespeicherten Daten Soll- Reaktionseigenschaften der Reifen (3a, 6a) heranzieht und mit den ermittelten Ist- Reaktionseigenschaften (tx, ty) der Reifen (3a, 6a) vergleicht und in Abhängigkeit dieses Vergleichs ein Ausgangssignal (S5) ausgibt.

7. Steuereinrichtung nach Anspruch 6, **dadurch gekennzeichnet, dass** die Steuereinrichtung (4) als Soll-Reaktionseigenschaften der Reifen (3a, 6a) Anfangs-Messungen bei neuen Reifen (3a, 3b) abspeichert.

8. Steuereinrichtung nach einem der vorherigen Ansprüche, **dadurch gekennzeichnet, dass** die Reaktionseigenschaften der Reifen (3a, 6a) Reibwerte der Reifen (3a, 6a) in Abhängigkeit des Aggregatzustands der Wasserschicht (12) und/oder der Höhe (h) der Wasserschicht (12) sind.

9. Steuereinrichtung nach einem der vorherigen Ansprüche, **dadurch gekennzeichnet, dass** der spektroskopische Sensor (10) für spektroskopische Messungen zumindest teilweise im Infrarot-Bereich ausgelegt ist, insbesondere in drei Wellenlängenbereichen, die eine Absorptions-Wellenlänge zur Detektion von Wasser von z. B. 1460 µm, eine Absorptions-Wellenlänge zur Detektion von Eis von z. B. 1550 nm und eine Referenz-Wellenlänge ohne relevante Absorption von Wasser und Eis umfassen.

10. Fahrzeug-Regelsystem, das aufweist:
eine Steuereinrichtung nach einem der vorherigen Ansprüche,
Fahrzustands-Sensoren (5, 8, 9) zur Messung von Fahrzustands-Messgrößen (S1, S2, S3) und Ausgabe von Fahrzustands- Messsignalen (S1, S2, S3) an die Steuereinrichtung (4), und
einen spektroskopischen Sensor (10), der auf die Fahrbahn-Oberfläche (2a) ausgerichtet ist und Fahrbahn-Messsignale (S4) an die Steuereinrichtung (4) ausgibt,
wobei der spektroskopische Sensor (10) ein Absorptionsverhalten und/oder Reflektionsverhalten der Fahrbahn-Oberfläche (2a) in einem für Wasser relevanten Wellenlängenbereich ermittelt.

11. Verfahren zum Ermitteln mindestens eines Reifen-Zustandes eines Fahrzeug-Reifens (3a, 6a), bei dem Fahrzustands-Messsignale (S1, S2, S3) von Fahrzustands-Sensoren (5, 8, 9) des Fahrzeugs (1) aufgenommen werden und aus den Fahrzustands- Messsignalen (S1, S2, S3) Reaktionseigenschaften (tx, ty) der Fahrzeug-Räder (3, 6) ermittelt werden,
wobei
weiterhin Fahrbahn-Messsignale (S4) eines auf eine Fahrbahn-Oberfläche (2a) ausgerichteten spektroskopischen Sensors (10) aufgenommen werden und hieraus das Vorhandensein und/oder Eigenschaften einer Wasserschicht (12) auf der Fahrbahn-Oberfläche (2a) ermittelt werden, und
aus den ermittelten Reaktionseigenschaften (tx, ty) der Fahrzeug-Räder (3, 6) und den Fahrbahn-Messsignalen (S4) Reifeneigenschaften der Reifen (3a, 6a) ermittelt werden, **dadurch gekennzeichnet, dass** aus den ermittelten Reifeneigenschaften der Reifenzustand ermittelt wird und dass bewertet wird, ob das daraus abgeleitete Reaktionsverhalten der Reifen dem Zustand der Fahrbahnoberfläche angemessen ist oder nicht.

## Claims

1. Control device (4) for a vehicle regulating system (7),
wherein the control device (4) picks up driving state measurement signals (S1, S2, S3) from driving state sensors (5, 8, 9) of the vehicle (1) and determines reaction properties (tx, ty) of the vehicle wheels (3, 6) from the driving state measurement signals (S1, S2, S3),
wherein
the control device (4) also picks up roadway measurement signals (S4) of a spectroscopic sensor (10) which is aligned with a roadway surface (2a), and said control device (4) determines therefrom the presence and/or properties of a water layer (12) on the roadway surface (2a), and
the control device (4) determines tire properties of the tires (3a, 6a) from the determined reaction properties (tx, ty) of the vehicle wheels (3, 6) and the roadway measurement signals (S4),
**characterized in that** the control device determines the state of the tires from the determined tire properties, and **in that** it is evaluated whether the reaction behaviour of the tires derived therefrom is appropriate to the state of the roadway surface or not.

2. Control device according to Claim 1, **characterized in that** the control device (4) determines a slip behaviour (tx, ty) of the vehicle wheels (3, 6) as reaction properties (tx, ty) of the vehicle wheels (3, 6),
**in that** the control device (4) determines, from the driving state measurement signals (S1, S2, S3), forces (Fx, Fy) and/or torques (Mω) acting at the vehicle wheels (3, 6), and also determines at which forces (Fx, Fy) and/or torques (Mω) a longitudinal slip (tx) and/or lateral slip (ty) of the individual vehicle wheels (3, 6) starts.

3. Control device according to Claim 2, **characterized in that** the control device (4) determines the slip behaviour (tx, ty) when there are sufficiently large forces (Fx, Fy) or torques (Mω), in particular when a regulating intervention (S6) of the vehicle regulating system (ABS, ESC) starts.

4. Control device according to Claim 2 or 3, **characterized in that** it determines the forces (Fx, Fy) and/or torques (Mω) acting at the vehicle wheels (3, 6) from one or more of the following driving state measurement variables:
longitudinal speed (v), longitudinal acceleration (a), lateral speed (q), lateral acceleration (aq), yaw rate (ω) of the vehicle (1), wheel speeds (n) of the vehicle wheels (3, 6).

5. Control device according to one of the preceding claims, **characterized in that** from the roadway measurement signals (S4) the control device (4) determines, on the one hand, the presence and, on the other hand, the level (h) and/or aggregate state of a water layer (12) on the roadway surface (2a).

6. Control device according to Claim 5, **characterized in that** said control device uses setpoint reaction properties of the tires (3a, 6a) from previously stored data and compares said setpoint reaction properties with the determined actual reaction properties (tx, ty) of the tires (3a, 6a), and outputs an output signal (S5) as a function of this comparison.

7. Control device according to Claim 6, **characterized in that** in the case of new tires (3a, 3b) the control device (4) stores initial measurements as setpoint reaction properties of the tires (3a, 6a).

8. Control device according to one of the preceding claims, **characterized in that** the reaction properties of the tires (3a, 6a) are friction values of the tires (3a, 6a) as a function of the aggregate state of the water layer (12) and/or the level (h) of the water layer (12).

9. Control device according to one of the preceding claims, **characterized in that** the spectroscopic sensor (10) is configured for spectroscopic measurements, at least partially in the infrared range, in particular in three wavelength ranges which comprise an absorption wavelength for detecting water of, for example, 1460 µm, an absorption wavelength for detecting ice of, for example, 1550 nm and a reference wavelength without relevant absorption of water or ice.

10. Vehicle regulating system which has:
a control device according to one of the preceding claims,
driving state sensors (5, 8, 9) for measuring driving state measurement variables (S1, S2, S3) and outputting driving state measurement signals (S1, S2, S3) to the control device (4), and
a spectroscopic sensor (10) which is aligned with the roadway surface (2a) and outputs roadway measurement signals (S4) to the control device (4),
wherein the spectroscopic sensor (10) determines an absorption behaviour and/or reflection behaviour of the roadway surface (2a) in a wavelength range which is relevant for water.

11. Method for determining at least one tire state of a vehicle tire (3a, 6a), in which
driving state measurement signals (S1, S2, S3) are picked up by driving state sensors (5, 8, 9) of the vehicle (1), and reaction properties (tx, ty) of the vehicle wheels (3, 6) are determined from the driving state measurement signals (S1, S2, S3),
wherein
roadway measurement signals (S4) of a spectroscopic sensor (10) which is aligned with a roadway surface (2a) are also picked up, and the presence and/or properties of a water layer (12) on the roadway surface (2a) are/is determined therefrom, and
tire properties of the tires (3a, 6a) are determined from the determined reaction properties (tx, ty) of the vehicle wheels (3, 6) and the roadway measurement signals (S4), **characterized in that** the state of the tires is determined from the determined tire properties and **in that** it is evaluated whether the reaction behaviour of the tires deduced therefrom is appropriate to the state of the roadway surface or not.

## Revendications

1. Dispositif de commande (4) pour un système de régulation de véhicule (7),
dans lequel le dispositif de commande (4) enregistre des signaux de mesure d'état de conduite (S1, S2, S3) de capteurs d'état de conduite (5, 8, 9) du véhicule (1) et détermine, à partir des signaux de mesure d'état de conduite (S1, S2, S3), des propriétés de réaction (tx, ty) des roues de véhicule (3, 6),
dans lequel
le dispositif de commande (4) enregistre en outre des signaux de mesure de voie de circulation (S4) d'un capteur spectroscopique (10) orienté sur une surface de voie de circulation (2a) et détermine à partir de cela la présence et/ou des propriétés d'une couche d'eau (12) sur la surface de la voie de circulation (2a), et
le dispositif de commande (4) déterminant, à partir des propriétés de réaction (tx, ty) déterminées des roues de véhicule (3, 6) et des signaux de mesure de voie de circulation (S4), des propriétés de pneu des pneus (3a, 6a),
**caractérisé en ce que** le dispositif de commande détermine l'état des pneus à partir des propriétés de pneu déterminées et **en ce que** l'on évalue si, oui ou non, le comportement de réaction des pneus qui en est déduit est adapté à l'état de la surface de la voie de circulation.

2. Dispositif de commande selon la revendication 1, **caractérisé en ce que** le dispositif de commande (4) détermine, en guise de propriétés de réaction (tx, ty) des roues de véhicule (3, 6), un comportement de patinage (tx, ty) des roues de véhicule (3, 6),
**en ce que** le dispositif de commande (4) détermine, à partir des signaux de mesure d'état de conduite (S1, S2, S3), des forces (Fx, Fy) et/ou moments de force (Mω̅) s'exerçant sur les roues de véhicule (3, 6) et détermine en outre avec quelles forces (Fx, Fy) et/ou quels moments de force (Mω̅) un patinage longitudinal (tx) et/ou un patinage transversal (ty) des roues de véhicule (3, 6) individuelles a lieu.

3. Dispositif de commande selon la revendication 2, **caractérisé en ce que** le dispositif de commande (4) détermine le comportement de patinage (tx, ty) en cas de forces (Fx, Fy) suffisamment importantes ou de moments de force (Mω̅) suffisamment importants, en particulier en cas d'utilisation d'une intervention de régulation (S6) du système de régulation de véhicule (ABS, ESC).

4. Dispositif de commande selon la revendication 2 ou 3, **caractérisé en ce qu'**il détermine les forces (Fx, Fy) et/ou moments de force (Mω̅) s'exerçant sur les roues de véhicule (3, 6) à partir d'une ou plusieurs des grandeurs de mesure de l'état de conduite suivantes:
une vitesse longitudinale (v), une accélération longitudinale (a), une vitesse transversale (q), une accélération transversale (aq), un taux d'embardée (ω̅) du véhicule (1), des vitesses de rotation de roue (n) des roues de véhicule (3, 6).

5. Dispositif de commande selon l'une des revendications précédentes, **caractérisé en ce que** le dispositif de commande (4) détermine, à partir des signaux de mesure de voie de circulation (S4), d'une part une présence et d'autre part une hauteur (h) et/ou un état d'agrégat d'une couche d'eau (12) sur la surface de la voie de circulation(2a).

6. Dispositif de commande selon la revendication 5, **caractérisé en ce qu'**il tient compte de propriétés de réaction de consigne des pneus (3a, 6a) à partir de données préenregistrées et les compare avec les propriétés de réaction réelles (tx, ty) des pneus (3a, 6a) déterminées et émet un signal de sortie (S5) en fonction de cette comparaison.

7. Dispositif de commande selon la revendication 6, **caractérisé en ce que** le dispositif de commande (4) enregistre, en guise de propriétés de réaction de consigne des pneus (3a, 6a), des mesures de début en cas de pneus neufs (3a, 3b).

8. Dispositif de commande selon l'une des revendications précédentes, **caractérisé en ce que** les propriétés de réaction des pneus (3a, 6a) sont des coefficients de friction des pneus (3a, 6a) en fonction de l'état d'agrégat de la couche d'eau (12) et/ou de la hauteur (h) de la couche d'eau (12).

9. Dispositif de commande selon l'une des revendications précédentes, **caractérisé en ce que** le capteur spectroscopique (10) pour mesures spectroscopiques est conçu au moins partiellement dans la plage infrarouge, en particulier dans trois plages de longueurs d'ondes, lesquelles comprennent une longueur d'onde d'absorption pour la détection d'eau de 1460 µm par exemple, une longueur d'onde d'absorption pour la détection de glace de 1550 nm par exemple, et une longueur d'onde de référence sans absorption pertinente d'eau et de glace.

10. Système de régulation de véhicule automobile, lequel présente:
un dispositif de commande selon l'une des revendications précédentes, des capteurs d'état de conduite (5, 8, 9) pour la mesure de grandeurs de mesure d'état de conduite (S1, S2, S3) et l'émission de de signaux de mesure d'état de conduite (S1, S2, S3) au dispositif de commande (4), et
un capteur spectroscopique (10), lequel est orienté sur la surface de la voie de circulation (2a) et émet des signaux de mesure de voie de circulation (S4) au dispositif de commande (4),
dans lequel le capteur spectroscopique (10) détermine un comportement d'absorption et/ou un comportement de réflexion de la surface de la voie de circulation (2a) dans une plage de longueurs d'onde pertinente pour de l'eau.

11. Procédé pour déterminer au moins un état de pneu d'un pneu de véhicule (3a, 6a), dans lequel
des signaux de mesure d'état de conduite (S1, S2, S3) sont enregistrés par des capteurs d'état de conduite (5, 8, 9) du véhicule (1) et à partir des signaux de mesure d'état de conduite (S1, S2, S3), des propriétés de réaction (tx, ty) des roues de véhicule (3, 6) étant déterminées,
dans lequel
des signaux de mesure de voie de circulation (S4) d'un capteur spectroscopique (10) orienté vers une surface de voie de circulation (2a) sont en outre enregistrés et à partir de cela, la présence et/ou des propriétés d'une couche d'eau (12) sur la surface de la voie de circulation (2a) étant déterminées, et
à partir des propriétés de réaction déterminées (tx, ty) des roues de véhicule (3, 6) et des signaux de mesure de la voie de circulation (S4), des propriétés de pneu des pneus (3a, 6a) étant déterminées,
**caractérisé en ce que** l'on détermine l'état des pneus à partir des propriétés de pneu déterminées et **en ce que** l'on évalue si le comportement de réaction des pneus qui en est déduit est adapté ou non à l'état de la surface de la voie de circulation.
